# EUROPEAN PATENT APPLICATION

(11) **EP 4 510 272 A1**
(43) Date of publication of application: **19.02.2025**
(21) Application number: 22965532.9
(22) Date of filing: 17.11.2022
(51) Int. Cl.: H01M 10/054, H01M 10/0525, H01M 4/58, H01M 4/48

(54) **POSITIVE ELECTRODE SHEET, ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: LI, Quanguo, Ningde, Fujian 352100 (CN); LIU, Qian, Ningde, Fujian 352100 (CN); XIAO, Dejun, Ningde, Fujian 352100 (CN); CHEN, Jiahua, Ningde, Fujian 352100 (CN); SUN, Jingxuan, Ningde, Fujian 352100 (CN); YE, Yonghuang, Ningde, Fujian 352100 (CN)
(74) Representative: Behr, Wolfgang
(86) International application number: PCT/CN2022/132649
(87) International publication number: WO 2024/103350

(57) **Abstract**

This application discloses a positive electrode plate, an electrode assembly, a battery cell, a battery, and an electric device. The positive electrode plate includes a positive electrode current collector, a positive electrode active substance layer located on a surface of the positive electrode current collector, and a functional layer connected to the positive electrode active substance layer. The positive electrode active substance layer includes a Li-containing active material and a Na-containing active material, where a mass ratio of the Na-containing active material and the Li-containing active material is P1, satisfying 0.02≤P1≤50. Having a positive electrode active substance layer that employs a combination of Li-containing and Na-containing active materials, the positive electrode plate can have both high energy density and high low-temperature capacity retention rate.

## Description

### TECHNICAL FIELD

This application relates to the field of battery technologies, and specifically to a positive electrode plate, an electrode assembly, a battery cell, a battery, and an electric device.

### BACKGROUND

At present, it is generally difficult for batteries to have both high energy density and high low-temperature capacity retention rate.

### SUMMARY

In view of the foregoing problem, this application provides a positive electrode plate, an electrode assembly, a battery cell, a battery, and an electric device, which can have both high energy density and high low-temperature capacity retention rate.

Embodiments of this application are implemented as follows.

According to a first aspect, an embodiment of this application provides a positive electrode plate. The positive electrode plate includes a positive electrode current collector, a positive electrode active substance layer located on a surface of the positive electrode current collector, and a functional layer connected to the positive electrode active substance layer. The positive electrode active substance layer includes a Na-containing active material and a Li-containing active material, where a mass ratio of the Na-containing active material and the Li-containing active material is P1, satisfying 0.02≤P1≤50. In the technical solution of this embodiment of this application, the Li-containing active material and the Na-containing active material are combined according to a particular mass ratio, allowing the battery cell to have high low-temperature capacity retention rate while having high energy density.

In some embodiments, 0.0.02≤P1≤5 or 10≤P1≤50. In these embodiments, when 0.0.02≤P1≤5 is satisfied, a considerably high energy density can be achieved along with a high low-temperature capacity retention rate; and when 10≤P1≤50 is satisfied, a considerably high low-temperature capacity retention rate can be achieved along with a high energy density.

In some embodiments, a voltage range of the Li-containing active material is V1, and a voltage range of the Na-containing active material is V2, where a1≤V1≤a2, b1≤V2≤b2, and b1≤a1. In these embodiments, the voltage ranges of the Li-containing active material and the Na-containing active material have appropriate relative magnitudes, so during charge and discharge, both Li and Na can intercalate and deintercalate well, allowing the Li-containing active material and the Na-containing active material to cooperate effectively, thus helping to better achieve both high energy density and high low-temperature capacity retention rate.

In some embodiments, (a2-b1)>Min[(|a2-b2|), (|b1-a1|)] is satisfied. In these embodiments, the voltage ranges of the Li-containing active material and Na-containing active material satisfy the foregoing given relation, such that a difference between the voltage ranges of the Li-containing active material and Na-containing active material is below a specified standard. This better avoids intense competition between Li and Na during their intercalation into a negative electrode, and allows the Li-containing active material and the Na-containing active material to cooperate effectively, thus helping to better achieve both high energy density and high low-temperature capacity retention rate.

In some embodiments, the Li-containing active material includes one or more of Liₓ₁Fe_{y1}Mel_{(1-yl)}PO₄ and Liₓ₂Me2O₂, where 0.9≤x1≤1.1, 0.1≤y1≤1, Me1 includes one or more of elements Fe, Mn, Ti, Al, Ni, Co, and V, 0.9≤x2≤1.1, and Me2 includes one or more of elements Fe, Mn, Ti, Al, Ni, and Co. In these embodiments, a particular type of Li-containing active material is selected to effectively cooperate with the Na-containing active material, effectively achieving both high energy density and high low-temperature capacity retention rate, and having a lower cost than a lithium nickel cobalt manganate material.

In some embodiments, the Na-containing active material includes one or more of a Prussian blue material, Naₓ₃Me3_{y3}O₂₋ₐ, and a Na-containing polyanionic material, where 0.3≤x3≤1.1, 0.9<y3<1.1, -0.1≤a≤0.1, and Me3 includes one or more of elements Fe, Mn, Ti, Al, Ni, Co, and Cu. In these embodiments, a particular type of Na-containing active material is selected to effectively cooperate with the Li-containing active material, effectively achieving both high energy density and high low-temperature capacity retention rate.

In some embodiments, the Na-containing active material is Naₓ₃Me3_{y3}O₂₋ₐ, where 0.7≤x3≤1.1, 0.9≤y3≤1.1, -0.1≤a≤0.1, and Me3 includes one or more of elements Fe, Mn, Ti, Ni, Co and Cu and one or more of elements B, Al, Zr, Zn, Mg, Sb, and Si. In these embodiments, a sodium-ion oxide, with advantages such as stable cycling performance, high conductivity, stable structure, and low cost, is selected as the Na-containing active material.

In some embodiments, the positive electrode active substance layer has a compacted density of P2, measured in g/cm³; a particle size ratio of the Li-containing active material and the Na-containing active material is P3; and at least one of the following conditions (b1) and (b2) is satisfied: (b1) 0.5≤P2≤5, optionally 2≤P2≤3; and (b2) 0.1≤P3≤10, optionally 0.1≤P3≤5. In these embodiments, the positive electrode active substance layer has an appropriate compacted density, allowing the positive electrode plate to have a high energy density; in addition, the particle sizes of the Li-containing active material and Na-containing active material are regulated and controlled according to a specified ratio, further effectively avoiding a potential difference resulting from material oxidization causing self-discharge.

According to a second aspect, an embodiment of this application provides an electrode assembly including a negative electrode plate, a separator, and the positive electrode plate according to the foregoing embodiment.

In some embodiments, a negative electrode active material of the negative electrode plate includes hard carbon. In these embodiments, the addition of hard carbon in the negative electrode active material facilitates intercalation of alkali metal ions in a charging process, such that both the Li-containing active material and the Na-containing active material can function effectively, effectively achieving both high energy density and high low-temperature capacity retention rate.

In some embodiments, the hard carbon contributes to a capacity proportion of P4 in the negative electrode active material and the Na-containing active material contributes to a capacity proportion of P5 in the positive electrode active material, where P4≥P5. In these embodiments, the proportion of the hard carbon in the negative electrode active material matches the composition ratio of the active material in the positive electrode plate, further facilitating full intercalation of the alkali metal ions in the charging process and more effectively achieving both high energy density and high low-temperature capacity retention rate.

According to a third aspect, an embodiment of this application provides a battery cell including a housing and the electrode assembly according to the foregoing embodiment, where the electrode assembly is accommodated in the housing.

In some embodiments, the battery cell exhibits a capacity greater than or equal to 80% at a temperature of -20°C, with a capacity of the battery cell at a temperature of 25°C considered as 100% for measurement.

According to a fourth aspect, an embodiment of this application provides a battery including the battery cell according to the foregoing embodiment.

According to a fifth aspect, an embodiment of this application further provides an electric device including the battery cell according to the foregoing embodiment or the battery according to the foregoing embodiment.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

In order to describe the technical solutions in the embodiments of this application more clearly, the following briefly describes the accompanying drawings required for describing the embodiments. It should be understood that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an electrode assembly according to some embodiments of this application;
FIG. 5 is a schematic structural diagram of a first positive electrode plate according to some embodiments of this application; and
FIG. 6 is a schematic structural diagram of a second positive electrode plate according to some embodiments of this application.

### Reference signs:

1000. vehicle;
100. battery; 200. controller; 300. motor;
10. box; 11. first portion; 12. second portion; 13. accommodating space;
20. battery cell; 21. housing; 22. electrode assembly; 23. electrode terminal; 24. pressure relief structure;
211. housing body; 212. cover; 213. sealed space;
221. positive electrode plate; 222. negative electrode plate; 223. separator;
2211. positive electrode current collector; and 2212. positive electrode active substance layer.

### DESCRIPTION OF EMBODIMENTS

To make the objectives, technical solutions, and advantages of the embodiments of this application clearer, the following clearly and completely describes the technical solutions of the embodiments of this application. Embodiments, in which specific conditions are not specified, are implemented in accordance with general conditions or conditions recommended by a manufacturer. The reagents or instruments used are all conventional products that are commercially available if no manufacturer is indicated.

The following describes in detail the embodiments of technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, particular sequence or primary-secondary relationship of the technical features indicated.

In the descriptions of the embodiments of this application, it should be noted that orientations or positional relationships indicated by the technical terms "inside", "outside" and the like are based on the orientation or positional relationships shown in the accompanying drawings, and are merely for ease and brevity of description of the embodiments of this application rather than indicating or implying that the means or elements mentioned must have specific orientations or must be constructed or manipulated according to specific orientations, and therefore shall not be construed as any limitation on the embodiments of this application.

In the descriptions of the embodiments of this application, unless otherwise specified and defined explicitly, the technical terms "mounting", "connection", "join", and "fastening" should be understood in their general senses. For example, they may refer to a fixed connection, a detachable connection, or an integral connection; and may refer to a direct connection or an indirect connection via an intermediate medium. Persons of ordinary skill in the art can understand specific meanings of these terms in the embodiments of this application as appropriate to specific situations.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the embodiments of this application, the same reference signs denote the same components, and for brevity, in different embodiments, detailed descriptions of the same components are not repeated. It should be understood that, as shown in the accompanying drawings, dimensions such as thickness, length, and width of various components and dimensions such as thickness, length, and width of integrated apparatuses in the embodiments of this application are merely for illustrative purposes and should not constitute any limitation on this application.

Currently, from the perspective of market development, application of traction batteries is becoming more and more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also expanding.

As a main form of traction batteries at present, lithium-ion batteries can have high energy density but usually undesirable low-temperature capacity retention rate in certain designs.

The applicant has found through research that combination of a Li-containing active material and a Na-containing active material at a particular mass ratio in a positive electrode plate allows for battery cell having not only high energy density but also high low-temperature capacity retention rate.

On the basis of the foregoing research, an embodiment of this application provides a positive electrode plate having a positive electrode active substance layer in which a Li-containing active material and a Na-containing active material are combined according to a particular mass ratio, thus effectively achieving both high energy density and high low-temperature capacity retention rate.

For ease of description, an electric device in an embodiment of this application being a vehicle is used as an example for description in the following embodiments.

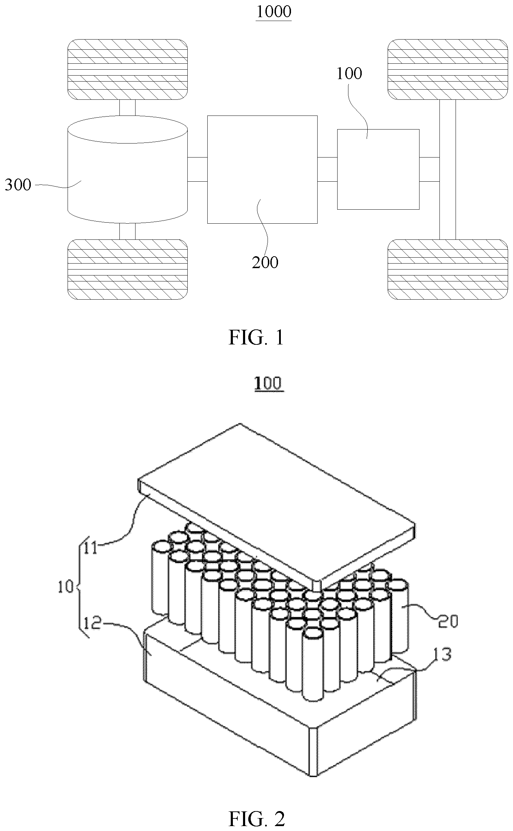

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

In this application, the battery 100 refers to a single physical module that includes a plurality of battery cells 20 for providing a higher voltage and capacity and may be a battery 100 pack, a battery 100 module, or the like. The battery 100 may include a box 10 for packaging the plurality of battery cells 20. The box 10 can prevent liquids or other foreign matter from affecting charging or discharging of the battery cells 20.

Refer to FIG. 2. FIG. 2 is an exploded view of a battery 100 according to some embodiments of this application. The battery 100 includes a box 10 and a plurality of battery cells 20, where the plurality of battery cells 20 are accommodated in the box 10. The box 10 is configured to accommodate the battery cells 20, and the box 10 may be of various structures. In some embodiments, the box 10 may include a first portion 11 and a second portion 12. The first portion 11 and the second portion 12 fit together so that the first portion 11 and the second portion 12 jointly define an accommodating space 13 for accommodating the battery cells 20. The second portion 12 may be a hollow structure with an opening at one side, the first portion 11 is a plate-shaped structure, and the first portion 11 covers the opening side of the second portion 12 to form the box 10 having the accommodating space 13. Alternatively, the first portion 11 and the second portion 12 may each be a hollow structure with an opening at one side, and the opening side of the first portion 11 fits with the opening side of the second portion 12 to form the box 10 having the accommodating space 13. Certainly, the first portion 11 and the second portion 12 may be in various shapes, such as a cylinder or a cuboid.

In the battery 100, the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Alternatively, the plurality of battery cells 20 may be firstly connected in series, parallel, or series-parallel to form modules, and then a plurality of modules are connected in series, parallel, or series-parallel to form an entirety which is accommodated in the box 10. The battery 100 may further include other structures. For example, the plurality of battery cells 20 may be electrically connected via a busbar, such that the plurality of battery cells 20 are connected in series, parallel, or series-parallel.

The battery cell 20 refers to a smallest unit constituting the battery 100. The battery cell 20 may be a secondary battery 100 or a primary battery 100 or may be a lithium-sulfur battery 100, a sodium-ion battery 100, or a magnesium-ion battery 100, without being limited thereto.

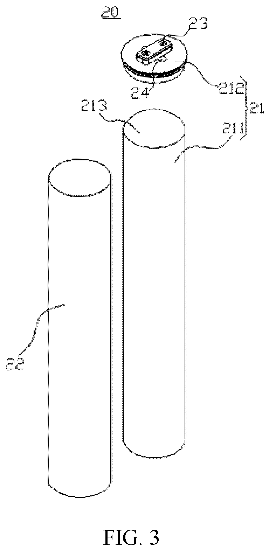

Referring to FIG. 3, the battery cell 20 may include a housing 21, an electrode assembly 22, and an electrolyte, where the electrode assembly 22 and the electrolyte are both accommodated in the housing 21.

The housing 21 may include a housing body 211 and a cover 212. The housing body 211 is a component configured to fit with the cover 212 to create an internal sealed space 213 of the battery cell 20, where the internal sealed space 213 created can be used to accommodate the electrode assembly 22, the electrolyte, and other components. The cover 212 is a component that covers an opening of the housing body 211 to isolate the internal environment of the battery cell 20 from the external environment. The cover 212 may have a shape adapting to the shape of the housing body 211 so as to fit with the housing body 211. The cover 212 may also be provided with functional components such as an electrode terminal 23 and a pressure relief structure 24. A sealing ring may be provided between the opening of the housing body 211 and the cover 212 to seal the housing body 211 and the cover 212.

The housing body 211 and the cover 212 may be of various shapes and sizes, for example, a rectangular shape, a cylindrical shape, and a hexagonal prism shape. Specifically, the shapes of the housing body 211 and the cover 212 may be determined based on a specific shape and size of the electrode assembly 22. The housing body 211 and the cover 212 may be made of various materials. Examples include but are not limited to metals such as copper, iron, aluminum, steel, and aluminum alloy. The sealing ring may be made of various materials. Examples include but are not limited to high-toughness and anti-fatigue electrolyte corrosion resistant materials such as PP (polypropylene), PC (polycarbonate), and PET (polyethylene terephthalate). A plating layer may be formed on the outer surface of the housing body 211. The plating layer may be made of various materials, for example without limitation, corrosion-resistant materials such as Ni and Cr.

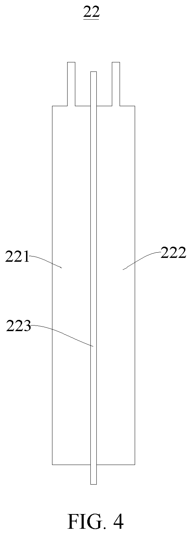

Referring to FIG. 4, the electrode assembly 22 may include a positive electrode plate 221, a negative electrode plate 222, and a separator 223. The battery cell 20 works mainly depending on migration of metal ions between the positive electrode plate 221 and the negative electrode plate 222. The positive electrode plate 221 includes a positive electrode current collector 2211 and a positive electrode active substance layer 2212. In a lithium-ion battery cell 20 as an example, the positive electrode current collector 2211 may be made of aluminum, and a positive electrode active material in the positive electrode active substance layer 2212 is selected according to the requirements of the embodiments of this application. The negative electrode plate 222 includes a negative electrode current collector and a negative electrode active substance layer. The negative electrode current collector may be made of copper, and a negative electrode active material in the negative electrode active substance layer may be carbon, silicon, or the like. In addition, the electrode assembly 22 may be a wound structure or a stacked structure, but the embodiments of this application are not limited thereto.

The following describes in detail the positive electrode plate 221 provided in the embodiments of this application with reference to the accompanying drawings.

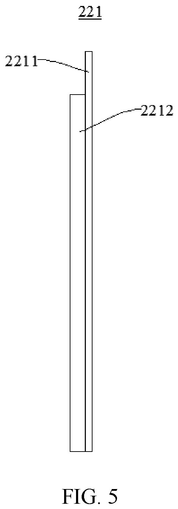

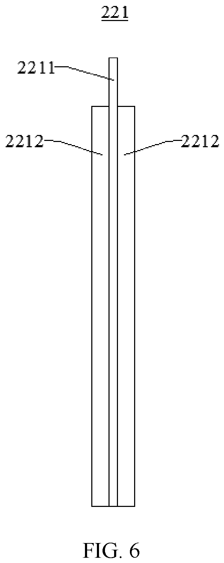

Referring to FIG. 5 and FIG. 6, according to a first aspect, an embodiment of this application provides a positive electrode plate 221 including a positive electrode current collector 2211, a positive electrode active substance layer 2212 located on the surface of the positive electrode current collector 2211, and a functional layer connected to the positive electrode active substance layer 2212. The positive electrode active substance layer 2212 includes a Na-containing active material and a Li-containing active material, where a mass ratio of the Na-containing active material and the Li-containing active material is P1, satisfying 0.02≤P1≤50.

The Li-containing active material refers to a positive electrode active substance containing Li, which may be a positive electrode active substance that contains Li as a main intercalating/deintercalating element and barely contains element Na (mass percentage of Na≤0.01wt%). Examples include but are not limited to materials such as lithium cobaltate, lithium iron phosphate, ternary lithium, lithium manganate, lithium-rich manganese-based material, or lithium-sulfur material.

The Na-containing active material refers to a positive electrode active substance containing Na, which may be a positive electrode active substance that contains Na as a main intercalating/deintercalating element and barely contains element Li (mass percentage of Li≤0.01wt%). Examples include but are not limited to a Na-containing transition metal oxide, a Na-containing polyanionic compound, and a Na-containing Prussian blue compound.

In an example, example values of P1 include but are not limited to any one of 0.02, 0.05, 0.1, 0.2, 0.3, 0.4, 0.5, 0.6, 0.7, 0.8, 0.9, 1, 2, 3, 4, 5, 6, 7, 8, 9, 10, 12, 15, 18, 20, 22, 25, 28, 30, 32, 35, 38, 40, 42, 45, 48 and 50, or a value within a range defined by any two thereof.

In the technical solution of this embodiment of this application, the Li-containing active material and the Na-containing active material are combined according to a particular mass ratio, allowing the battery cell 20 to have high low-temperature capacity retention rate while having high energy density.

In some embodiments, 0.02≤P1≤5 or 10≤P1≤50.

In these embodiments, when 0.02≤P1≤5 is satisfied, a considerably high energy density can be achieved along with a high low-temperature capacity retention rate. When 10≤P1≤50 is satisfied, a considerably high low-temperature capacity retention rate can be achieved along with a high energy density.

The applicant has found through further research that in a battery cell 20 of which the positive electrode plate 221 includes both a Li-containing active material and a Na-containing active material, there is a competition between Li ions and Na ions during intercalation/deintercalation. This may results in the following cases: in a charging process, the Na ions are firstly adsorbed on the surface of the negative electrode, making the Li ions unable to intercalate; and in a discharging process, the Li ions intercalate into a layered structure, increasing the voltage and accordingly making the Na ions unable to intercalate.

In view of this, the applicant has found through in-depth research that the combination of the Li-containing active material and the Na-containing active material with matching voltage ranges can effectively rectify the problems of intercalation failure of Li in the charging process and intercalation failure of Na in the discharging process, allowing for better cooperation of the Li-containing active material and the Na-containing active material, thus helping to achieve both high energy density and high low-temperature capacity retention rate.

In some embodiments, a voltage range of the Li-containing active material is V1, and a voltage range of the Na-containing active material is V2, where a1≤V1≤a2, b1≤V2<b2, and b1≤a1.

In this application, after the Li-containing active material and the Na-containing active material are mixed, a charge-discharge curve of their mixture has two voltage plateaus in a low-SOC region, where the voltage plateau appearing earlier is V1, and the voltage plateau appearing later is V2. In an example, a method for testing V1 and V2 includes: a battery is charged and discharged at a rate of 0.1C (at a voltage of 1.5 V to 4.2 V), and in the discharge curve from lower SOC to higher SOC, the first sharp voltage rise (with a slope greater than 45°) corresponds to a voltage of V1, and the second sharp voltage rise (with a slope greater than 45°) corresponds to a voltage of V2.

In these embodiments, the voltage ranges of the Li-containing active material and the Na-containing active material have appropriate relative magnitudes, so during charge and discharge, both Li and Na can intercalate and deintercalate well, allowing the Li-containing active material and the Na-containing active material to cooperate effectively, thus helping to better achieve both high energy density and high low-temperature capacity retention rate.

In some embodiments, (a2-b1)>Min[(|a2-b2|), (|b1-a1|)] is satisfied.

In Min[(|a2-b2|), (|b1-a1|)], Min denotes a minimum value, |a2-b2| denotes an absolute value of a2-b2, and |b1-a1| denotes an absolute value of b1-a1.

In these embodiments, the voltage ranges of the Li-containing active material and Na-containing active material satisfy the foregoing given relation, such that a difference between the voltage ranges of the Li-containing active material and Na-containing active material is below a specified standard. This better avoids intense competition between Li and Na during their intercalation into the negative electrode, and allows the Li-containing active material and the Na-containing active material to cooperate effectively, thus helping to better achieve both high energy density and high low-temperature capacity retention rate.

In some embodiments, the Li-containing active material includes one or more of Liₓ₁Fe_{y1}Mel_{(1-yl)}PO₄ and Liₓ₂Me2O₂, where 0.9≤x1≤1.1, 0.1≤y1≤1, Me1 includes one or more of elements Fe, Mn, Ti, Al, Ni, Co, and V, 0.9≤x2≤1.1, and Me2 includes one or more of elements Fe, Mn, Ti, Al, Ni, and Co.

Liₓ₁Fe_{y1}Mel_{(1-yl)}PO₄ represents a lithium iron phosphate-type positive electrode active material. Example values of x1 include but are not limited to any one of 0.9, 1.0, and 1.1 or a value within a range defined by any two thereof. Example values of y1 include but are not limited to any one of 0.1, 0.2, 0.3, 0.4, 0.5, 0.6, 0.7, 0.8, and 0.9 or a value within a range defined by any two thereof.

Liₓ₂Me2O₂ represents a lithium-containing metal oxide-type positive electrode active material. Example values of x2 include but are not limited to any one of 0.9, 1.0, and 1.1 or a value within a range defined by any two thereof.

In these embodiments, a particular type of Li-containing active material is selected to effectively cooperate with the Na-containing active material, effectively achieving both high energy density and high low-temperature capacity retention rate, and having a lower cost than a lithium nickel cobalt manganate material.

In some embodiments, the Na-containing active material includes one or more of a Na-containing Prussian blue material, Naₓ₃Me3_{y3}O₂₋ₐ, and a Na-containing polyanionic material, where 0.3≤x3≤1.1, 0.9≤y3≤1.1, -0.1≤a≤0.1, and Me3 includes one or more of elements Fe, Mn, Ti, Al, Ni, Co, and Cu.

Naₓ₃Me3_{y3}O₂₋ₐ denotes a sodium-containing metal oxide-type positive electrode active material. Example values of x3 include but are not limited to any one of 0.4, 0.5, 0.6, 0.7, 0.8, 0.9, 1.0, and 1.1 or a value within a range defined by any two thereof; example values of y3 include but are not limited to any one of 0.9, 1.0, and 1.1 or a value within a range defined by any two thereof; and example values of a include but are not limited to any one of -0.1, 0, and 0.1 or a value within a range defined by any two thereof.

The chemical formula of the Na-containing Prussian blue positive electrode active material is, for example, Aₓ₄Me4[Fe(CN)₆]_{y4}·nH₂O. A includes one or more of alkali metal elements such as Li, Na, and K; Me4 is a valence-variable transition metal; and Me4 includes one or more of elements such as Mn, V, and Co. Optionally, 1.6≤x4≤2.0, 0.9≤y4≤1.1, and 1.2≤n≤1.6. In an example, a Prussian blue Na-containing active material is Na_{1.8}Mn[Fe(CN)₆]·1.4H₂O.

The Na-containing polyanionic material refers to a sodium-containing polyanionic positive electrode active material, of which the structural formula is, for example, Naₓ₅Me5_{y5}(X_{b}O_{c})_{d}Z_{w}. Me5 includes one or more of metal elements such as Ti, V, and Fe; X includes one or more of elements such as S and P; and Z includes one or more of elements such as Cl and F. x5, y5, b, and C are all greater than 0, and w may be 0. In an example, the Na-containing polyanionic material is NaVPO₄.

In these embodiments, a particular type of Na-containing active material is selected to effectively cooperate with the Li-containing active material, effectively achieving both high energy density and high low-temperature capacity retention rate.

In some embodiments, the Na-containing active material is Naₓ₃Me3_{y3}O₂₋ₐ, where 0.7≤x3≤1.1, 0.9≤y3≤1.1, -0.1≤a≤0.1, and Me3 includes one or more of elements Fe, Mn, Ti, Ni, Co, and Cu and one or more of elements B, Al, Zr, Zn, Mg, Sb, and Si.

In other words, Me3 includes one or more of elements Fe, Mn, Ti, Ni, Co, and Cu, and Me3 also includes one or more of elements B, Al, Zr, Zn, Mg, Sb, and Si.

In these embodiments, a sodium layered oxide, with advantages such as stable cycling performance, high conductivity, stable structure, and low cost, is selected as the Na-containing active material.

In some embodiments, the positive electrode active substance layer 2212 has a compacted density of P2, measured in g/cm³; a particle size ratio of the Li-containing active material and the Na-containing active material is P3; and at least one of the following conditions (b1) and (b2) is satisfied: (b1) 0.5≤P2≤5, optionally 2≤P2≤3; and (b2) 0.1≤P3≤10, optionally 0.1≤P3≤5.

In the condition (b1), example values of P2 include but are not limited to any one of 0.5, 1, 1.5, 2, 2.5, 3, 3.5, 4, 4.5, and 5 or a value within a range defined by any two thereof.

In the condition (b2), example values of P2 include but are not limited to any one of 0.1, 0.5, 1, 2, 3, 4, 5, 6, 7, 8, 9, and 10 or a value within a range defined by any two thereof.

The particle size of the active material is the apparent particle size of particles. In an example, a method for testing the particle size of the Li-containing active material and the particle size of the Na-containing active material includes: performing particle polishing and sectional scanning on the positive electrode plate 221; randomly selecting a square region from a cross section of the positive electrode plate 221, where a side length of the square is a thickness size of the positive electrode plate 221; and determining types of particles in an interface based on mapping of element Li and element Na, denoting the particle size of all Li particles as D-1, denoting the particle size of all Na particles as D-2, and calculating a ratio of D-1 and D-2 as P3.

In these embodiments, the positive electrode active substance layer 2212 has an appropriate compacted density, the Li-containing active material and the Na-containing active material have an appropriate compacted density ratio and particle size ratio, allowing the positive electrode plate 221 to have a high energy density; in addition, the particle sizes of the Li-containing active material and Na-containing active material are regulated and controlled according to the specified ratio, further effectively avoiding a potential difference resulting from material oxidization causing self-discharge.

According to a second aspect, an embodiment of this application provides an electrode assembly 22 including a negative electrode plate 222, a separator 223, and the positive electrode plate 221 according to the foregoing embodiment.

In some embodiments, a negative electrode active material of the negative electrode plate 222 includes hard carbon.

The negative electrode active material may include only hard carbon or may include both hard carbon and other conventional negative electrode active materials such as graphite.

Optionally, the negative electrode active material includes hard carbon and graphite, where example values of a mass ratio of hard carbon and graphite include but are not limited to any one of 0.1, 0.3, 0.5, 0.8, 1, 1.2 and 1.5 or a value within a range defined by any two thereof.

In these embodiments, the addition of hard carbon in the negative electrode active material facilitates intercalation of alkali metal ions in a charging process, such that both the Li-containing active material and the Na-containing active material can function effectively, effectively achieving both high energy density and high low-temperature capacity retention rate.

In some embodiments, the hard carbon contributes to a capacity proportion of P4 in the negative electrode active material and the Na-containing active material contributes to a capacity proportion of P5 in the positive electrode active material, where P4≥P5.

In an example, a method for testing P4 and P5 includes: respectively testing half button batteries corresponding to the positive electrode material and the negative electrode material; charging and discharging the button battery formed by the negative electrode plate with a lithium sheet at a charge and discharge voltage of 0 V to 2 V and at a rate of 0.1C, to obtain a discharge capacity P4; and charging and discharging the button battery formed by the positive electrode plate with a lithium sheet at a charge and discharge voltage determined based on a service voltage of the battery and at a rate of 0.1C, to obtain a discharge capacity P5.

In these embodiments, the proportion of the hard carbon in the negative electrode active material matches the composition ratio of the active material in the positive electrode plate 221, further facilitating full intercalation of alkali metal ions in the charging process and more effectively achieving both high energy density and high low-temperature capacity retention rate.

According to a third aspect, an embodiment of this application provides a battery cell 20 including a housing 21 and the electrode assembly 22 according to the foregoing embodiment, where the electrode assembly 22 is accommodated in the housing 21.

In some embodiments, the battery cell 20 exhibits a capacity greater than or equal to 80% at a temperature of -20°C, with a capacity of the battery cell 20 at a temperature of 25°C considered as 100% for measurement.

In an example, the battery cell 20 is tested in a thermostat. Firstly, the battery cell is charged to an upper limit of a rated voltage at a temperature of 25°C and at a rate of 0.3C, left standing for 2 hours and then discharged to a lower limit of the rated voltage at a rate of 0.3C, and a discharge capacity obtained at that point is recorded as C1; and subsequently, the battery cell 20 is charged to the upper limit of the rated voltage, the thermostat is cooled to -20°C, the battery cell is left standing for 2 hours and then discharged at a rate of 0.33C, and a discharge capacity obtained at that point is recorded as C2.

According to a fourth aspect, an embodiment of this application provides a battery 100 including the battery cell 20 according to the foregoing embodiment.

According to a fifth aspect, an embodiment of this application provides an electric device including the battery cell 20 according to the foregoing embodiment or the battery 100 according to the foregoing embodiment.

According to some embodiments of this application, the positive electrode active substance layer 2212 includes an Li-containing active material and a Na-containing active material; and the negative electrode active material is hard carbon. The Na-containing active material is Naₓ₃Me3_{y3}O₂₋ₐ. In addition, b1≤a1, (a2-b1)>Min[(|a2-b2|), (|b1-a1|)], 2≤P2≤3, and 0.1≤P3≤5.

Some specific examples are given below for better illustrating this application.

### 1. Preparation of battery cell

### (1) Preparation of negative electrode plate

A negative electrode active material, conductive carbon, a binder SBR, and a dispersant CMC were proportioned according to mass percentages of 97%, 0.05%, 0.15%, and 0.1%, dispersed in deionized water, and stirred to produce a slurry with a solid content of about 50%, and then the slurry was applied on the surface of a copper foil and dried to form a negative electrode active substance layer. A negative electrode plate was prepared through cold pressing and slitting for later use.

### (2) Preparation of positive electrode plate

A positive electrode active material, conductive carbon, and a binder PVDF were proportioned according to mass percentages of 90%, 5%, and 5%, dispersed in an NMP solution, and stirred to produce a slurry with a solid content of about 70%, and then the slurry was applied on the surface of an aluminum foil and dried to form a positive electrode active substance layer. A positive electrode plate was prepared through cold pressing and slitting for later use.

### (3) Assembly of battery cell

The positive electrode plate and the negative electrode plate were punched into small discs with a size of 14 mm, and the positive electrode plate, a separator, and the negative electrode plate were stacked in sequence and assembled into a button battery.

Electrolytic salts in the electrolyte included LiPF₆ and NaPF₆ at a mass ratio of 1:0.1.

### 2. Test method

(1) Initial discharge gram capacity test for materials: The electrode plates with active substances were punched into small discs with a diameter of 18 mm and were made into a button battery. The initial discharge gram capacity of the Li-containing active material was measured against a lithium sheet: the battery was charged to 4.2 V at a rate of 0.1C, left standing for 30 minutes, and then discharged to 2.5 V at a rate of 0.1C, and the initial discharge gram capacity of the Li-containing active material was the discharge capacity divided by a weight of the active substance on the small disc. The initial gram capacity of the Na-containing active material was measured against a sodium sheet, where the battery was charged to 4.2 V at a rate of 0.1C, left standing for 30 minutes and then discharged to 1.5 V at a rate of 0.1C, and the initial gram capacity of the Na-containing active material was the discharge capacity divided by a weight of the active substance on the small disc.
(2) Electrode plate compacted density test: After coated with the active substance, the electrode plate was dried and put on a cold press, and cold pressed at a speed of 10 m/min with a pressure of a pressure bar adjusted to 2 tons to 40 tons, and the thickness of the electrode plate and the thickness of its substrate were measured using a micrometer, where compacted density=weight of active substance per square centimeter of electrode plate/volume of active substance (g/cm³).
(3) Electrode plate discharge gram capacity test: The battery cell was charged and discharged at a rate of 0.1C at a temperature of 25°C, and the discharge gram capacity of the electrode plate was determined based on the capacity at the 5th cycle.
(4) Double-sided energy density test for the electrode plate: This equals the full discharge energy of the battery cell at 25°C and a rate of 0.33C divided by an area of the positive electrode plate in the battery cell.
(5) Low-temperature capacity retention rate test: Battery capacities were obtained in this way: A LAND battery test system was used for charging and discharging; the battery cell 20 was tested in a thermostat; firstly, the battery cell 20 was charged to an upper limit of the rated voltage at a temperature of 25°C and a rate of 0.3C, left standing for 2 hours and then discharged to a lower limit of the rated voltage at a rate of 0.3C, and a discharge capacity obtained at that point was recorded as C1; and subsequently, the battery cell 20 was charged to the upper limit of the rated voltage, the thermostat was cooled to -20°C, the battery cell 20 was left standing for 2 hours and then discharged at a rate of 0.33C, a discharge capacity obtained at that point was recorded as C2. A ratio of the capacities obtained at -20°C and 25°C was recorded as the low-temperature capacity retention rate, where low-temperature capacity retention rate=(C2/C1)×100%.

### 3. Test conditions and test results

The relevant conditions for different positive electrode plates used in the experimental groups are shown in Table 1 and Table 2, where Table 1 shows the material types and parameters of the positive electrode active substances in the positive electrode plates, while Table 2 shows the relationships between some material parameters of the positive electrode active substances. The conditions and performance parameters of the batteries in the examples are shown in Table 3.

**Table 1**

| Positive electrode plate No. | Na-containing active material | | | | | | | Li-containing active material | | | | |
|---|---|---|---|---|---|---|---|---|---|---|---|---|
| | Type | Voltage range (V) | | Initial discharge gram capacity (mA·h/g) | Compacted density (g/cm³) | D-2 (µm) | Type | Voltage range (V) | | Initial discharge gram capacity (mA·h/g) | Compacted density (g/cm³) | D-1 (µm) |
| | | b1 | b2 | | | | | a1 | a2 | | | |
| Electrode plate 1 | NaNi_{0.33}Fe_{0.33}Mn_{0.33}O₂ | 1.5 | 4.2 | 138 | 3.079 | 8.3 | NCM811 | 2.5 | 4.2 | 190 | 3.3 | 10 |
| Electrode plate 2 | NaNi_{0.33}Fe_{0.33}Mn_{0.33}O₂ | 1.5 | 4.2 | 138 | 3.079 | 8.3 | LMO | 2 | 4.3 | 176 | 3 | 15 |
| Electrode plate 3 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 4 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 5 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 6 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 7 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 8 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 9 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 10 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 11 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 12 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 13 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 14 | NaNi_{0.33}Fe_{0.33}Mn_{0.33}O₂ | 1.5 | 4.2 | 138 | 3.079 | 8.3 | LFP | 2 | 3.8 | 159 | 2.3 | 1.36 |
| Electrode plate 15 | PBA | 2 | 4 | 152 | 1.427 | 5 | LFP | 2 | 3.8 | 159 | 2.3 | 1.36 |
| Electrode plate 16 | NaVPO₄ | 2 | 4.5 | 128 | 4.23 | 10.1 | LFP | 2 | 3.8 | 159 | 2.3 | 1.36 |
| Electrode plate 17 | NaNi_{0.33}Fe_{0.33}Mn_{0.33}O₂ | 1.5 | 4.2 | 138 | 3.129 | 15.4 | LFP | 2 | 3.8 | 159 | 1.4 | 1.36 |
| Electrode plate 18 | NaNi_{0.33}Fe_{0.33}Mn_{0.33}O₂ | 1.5 | 4.2 | 138 | 1.05 | 0.9 | LFP | 2 | 3.8 | 159 | 9.8 | 12.66 |
| Electrode plate 19 | NaNi_{0.33}Fe_{0.33}Mn_{0.33}O₂ | 1.5 | 4.2 | 137 | 3.69 | 8.8 | LFP | 2 | 3.8 | 159 | 2.97 | 2.36 |
| Electrode plate 20 | NaNi_{0.33}Fe_{0.33}Mn_{0.33}O₂ | 1.5 | 4.2 | 138 | 2.08 | 1.37 | LFP | 2 | 3.8 | 159 | 9.37 | 7.67 |

PBA represents a Prussian blue Na-containing active material, with a molecular formula of Na_{1.8}Mn[Fe(CN)₆]·1.4H₂O. NCM811 represents a layered lithium nickel cobalt manganate composite material with a mass ratio of nickel, cobalt, and manganese being approximately 8:1:1. LMO represents lithium manganate. LFP represents lithium iron phosphate, with a molecular formula of LiFePO₄.

**Table 2**

| Positive electrode plate No. | P1 | P2 (g/cm³) | Satisfy b1≤a1? | Satisfy (a2-b1)>Min[(\|a2-b2\|), (\|b1-a1\|)]? | P3 |
|---|---|---|---|---|---|
| Electrode plate 1 | 1 | 3.16 | Yes | Yes | 1.2 |
| Electrode plate 2 | 1 | 3.02 | Yes | Yes | 1.8 |
| Electrode plate 3 | 1 | 2.48 | Yes | Yes | 0.2 |
| Electrode plate 4 | 0.02 | 2.32 | Yes | Yes | 0.2 |
| Electrode plate 5 | 0.1 | 2.33 | Yes | Yes | 0.2 |
| Electrode plate 6 | 0.3 | 2.35 | Yes | Yes | 0.2 |
| Electrode plate 7 | 0.5 | 2.39 | Yes | Yes | 0.2 |
| Electrode plate 8 | 0.8 | 2.42 | Yes | Yes | 0.2 |
| Electrode plate 9 | 1.5 | 2.51 | Yes | Yes | 0.2 |
| Electrode plate 10 | 2 | 2.55 | Yes | Yes | 0.2 |
| Electrode plate 11 | 5 | 2.65 | Yes | Yes | 0.2 |
| Electrode plate 12 | 8 | 2.72 | Yes | Yes | 0.2 |
| Electrode plate 13 | 10 | 2.85 | Yes | Yes | 0.2 |
| Electrode plate 14 | 50 | 3.01 | Yes | Yes | 0.2 |
| Electrode plate 15 | 1 | 2.68 | Yes | Yes | 0.3 |
| Electrode plate 16 | 1 | 2.39 | Yes | Yes | 0.1 |
| Electrode plate 17 | 1 | 2.26 | Yes | Yes | 0.09 |
| Electrode plate 18 | 1 | 5.43 | Yes | Yes | 14.07 |
| Electrode plate 19 | 1 | 3.33 | Yes | Yes | 0.27 |
| Electrode plate 20 | 1 | 5.73 | Yes | Yes | 5.60 |

**Table 3**

| Item | Positive electrode plate No. | Negative electrode active material | Discharge gram capacity of positive electrode plate (mA·h/g) | Double-sided energy density of positive electrode plate (Wh/dm²) | Low-temperatur e capacity retention rate (%) |
|---|---|---|---|---|---|
| Example 1 | Electrode plate 4 | Hard carbon | 130.0 | 9.5 | 65.0 |
| Example 2 | Electrode plate 5 | Hard carbon | 128.8 | 9.45 | 65.5 |
| Example 3 | Electrode plate 6 | Hard carbon | 126.4 | 9.32 | 66.0 |
| Example 4 | Electrode plate 7 | Hard carbon | 124.7 | 9.01 | 67.0 |
| Example 5 | Electrode plate 8 | Hard carbon | 122.8 | 8.91 | 68.0 |
| Example 6 | Electrode plate 3 | Hard carbon | 121.8 | 8.88 | 69.0 |
| Example 7 | Electrode plate 9 | Hard carbon | 120.0 | 8.76 | 70.0 |
| Example 8 | Electrode plate 10 | Hard carbon | 118.8 | 8.67 | 72.0 |
| Example 9 | Electrode plate 11 | Hard carbon | 116.1 | 8.21 | 75.0 |
| Example 10 | Electrode plate 12 | Hard carbon | 115.1 | 7.99 | 78.0 |
| Example 11 | Electrode plate 13 | Hard carbon | 114.7 | 7.89 | 80.0 |
| Example 12 | Electrode plate 14 | Hard carbon | 113.5 | 7.8 | 85.0 |
| Example 13 | Electrode plate 15 | Hard carbon | 127.5 | 8.88 | 75.6 |
| Example 14 | Electrode plate 16 | Hard carbon | 117.7 | 5.88 | 77.8 |
| Example 15 | Electrode plate 1 | Hard carbon | 134.5 | 9.38 | 87 |
| Example 16 | Electrode plate 2 | Hard carbon | 128.7 | 7.54 | 83 |
| Example 17 | Electrode plate 3 | Hard carbon:graphite =0.5 | 60.3 | 4.86 | 62.0 |
| Example 18 | Electrode plate 3 | Hard carbon:graphite =0.9 | 85.8 | 6.68 | 66.0 |
| Example 19 | Electrode plate 3 | Hard carbon:graphite =1.3 | 102.3 | 7.88 | 68.0 |
| Example 20 | Electrode plate 22 | Hard carbon | 106.9 | 7.80 | 59.7 |
| Example 21 | Electrode plate 23 | Hard carbon | 111.4 | 8.12 | 62.2 |
| Example 22 | Electrode plate 24 | Hard carbon | 102.1 | 7.45 | 57.0 |
| Example 23 | Electrode plate 25 | Hard carbon | 109.9 | 8.01 | 61.4 |

In the negative electrode active material, the ratio of hard carbon and graphite refers to their mass ratio. P4≥P5 are satisfied in all of Example 1 to Example 23.

It can be learned from Table 1 to Table 3 that:

In Examples 1 to 23, the Li-containing active material and the Na-containing active material are combined in the positive electrode active substance layer, and both high energy density and high low-temperature capacity retention rate can be achieved.

In Examples 1 to 12, the mass ratio P1 of the Li-containing active material and the Na-containing active material varies from 0.02 to 50, and both high energy density and high low-temperature capacity retention rate are achieved in each example. With the increase of the value of P1, the low-temperature capacity retention rate gradually increases, and when P1≥10, the low-temperature capacity retention rate can reach 80% or higher; and with the decrease of the value of P1, the energy density gradually increases, and when P1≤5, the energy density can reach 8 Wh/dm² or higher.

Different types of Na-containing active materials are respectively used in Example 6, Example 13, and Example 14, and both high energy density and high low-temperature capacity retention rate are achieved in each example.

Different types of Li-containing active materials are respectively used in Example 6, Example 15, and Example 16, and both high energy density and high low-temperature capacity retention rate are achieved in each example.

Negative electrode active materials with different compositions are respectively used in Example 6 and Examples 17 to 19, and in these examples, with gradual increase of the proportion of hard carbon, both the energy density and the low-temperature capacity retention rate gradually increase.

In Example 6 and Examples 20 to 23, P3 is smaller in Example 20 than in Example 6; both P2 and P3 are relatively large in Example 21; P2 is slightly larger in Example 22; both P2 and P3 are slightly larger in Example 23; and a higher energy density is achieved in Example 6.

In conclusion, it should be noted that the foregoing embodiments are merely for description of the technical solutions of this application rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A positive electrode plate, comprising a positive electrode current collector and a positive electrode active substance layer located on a surface of the positive electrode current collector, wherein the positive electrode active substance layer comprises a Li-containing active material and a Na-containing active material; and a mass ratio of the Na-containing active material and the Li-containing active material is P1, satisfying 0.02≤P1≤50.

2. The positive electrode plate according to claim 1, wherein 0.02≤P1≤5 or 10≤P1≤50.

3. The positive electrode plate according to claim 1 or 2, wherein a voltage range of the Li-containing active material is V1, and a voltage range of the Na-containing active material is V2, wherein a1≤V1≤a2, b1≤V2≤b2, and b1≤a1.

4. The positive electrode plate according to claim 3, satisfying (a2-b1)>Min[(|a2-b2|), (|b1-a1|)].

5. The positive electrode plate according to any one of claims 1 to 4, wherein the Li-containing active material comprises one or more of Liₓ₁Fe_{y1}Mel_{(1-y1)}PO₄ and Liₓ₂Me2O₂, wherein
0.9≤x1≤1.1, 0.1≤y1≤1, Me1 comprises one or more of elements Fe, Mn, Ti, Al, Ni, Co, and V, 0.9≤x2≤1.1, and Me2 comprises one or more of elements Fe, Mn, Ti, Al, Ni, and Co.

6. The positive electrode plate according to any one of claims 1 to 5, wherein the Na-containing active material comprises one or more of a Prussian blue material, Naₓ₃Me3_{y3}O₂₋ₐ, and a Na-containing polyanionic material, wherein
0.3≤x3≤1.1, 0.9≤y3≤1.1, -0.1≤a≤0.1, and Me3 comprises one or more of elements Fe, Mn, Ti, Al, Ni, Co, and Cu.

7. The positive electrode plate according to claim 6, wherein the Na-containing active material is Naₓ₃Me3_{y3}O₂₋ₐ, wherein
0.7≤x3≤1.1, 0.9≤y3≤1.1, -0.1≤a≤0.1, and Me3 comprises one or more of elements Fe, Mn, Ti, Ni, Co and Cu and one or more of elements B, Al, Zr, Zn, Mg, Sb, and Si.

8. The positive electrode plate according to any one of claims 1 to 7, wherein the positive electrode active substance layer has a compacted density of P2, measured in g/cm³; a particle size ratio of the Li-containing active material and the Na-containing active material is P3; and at least one of the following conditions (b1) and (b2) is satisfied:
(b1) 0.5≤P2≤5, optionally 2≤P2≤3; and
(b2) 0.1≤P3≤10, optionally 0.1≤P3≤5.

9. An electrode assembly, comprising a negative electrode plate, a separator, and the positive electrode plate according to any one of claims 1 to 8.

10. The electrode assembly according to claim 9, wherein a negative electrode active material of the negative electrode plate comprises hard carbon.

11. The electrode assembly according to claim 10, wherein the hard carbon contributes to a capacity proportion of P4 in the negative electrode active material and the Na-containing active material contributes to a capacity proportion of P5 in the positive electrode active material, wherein P4≥P5.

12. A battery cell, comprising a housing and the electrode assembly according to any one of claims 9 to 11, wherein
the electrode assembly is accommodated in the housing.

13. The battery cell according to claim 12, wherein the battery cell exhibits a capacity greater than or equal to 80% at a temperature of -20°C, with a capacity of the battery cell at a temperature of 25°C considered as 100% for measurement.

14. A battery, comprising a box and the battery cell according to claim 12 or 13, wherein
the battery cell is accommodated in the box.

15. An electric device, comprising the battery cell according to claim 12 or 13 or the battery according to claim 14.
